# EUROPÄISCHE PATENTANMELDUNG

(11) **EP 4 841 322 A2**
(43) Veröffentlichungstag der Anmeldung: **18.11.2026**
(21) Anmeldenummer: 26000023.7
(22) Anmeldetag: 20.04.2026
(51) Int. Cl.: G02B 6/42

(54) **SFP-MODUL**

(30) Priorität: 22.04.2025 DE 102025001307
(71) Anmelder: Areus GmbH, 71083 Herrenberg (DE)
(72) Erfinder: DENGLER, Osama, 71032 Böblingen (DE)
(74) Vertreter: Gittinger, Andreas

(57) **Zusammenfassung**

Die Erfindung betrifft ein SFP-Modul, das in einen SFP-Käfig eines Netzwerkgeräts (11) einsteckbar ist, mit einem Gehäuse (45) und einer eine Kommunikationsschnittstelle zur Datenübertragung repräsentierenden ersten Schnittstelle (14.1), wobei es eine eine Funktionsschnittstelle repräsentierende zweite Schnittstelle (17.1) aufweist und die Funktionsschnittstelle zur Konfiguration des SFP-Moduls oder zur Konfiguration des SFP-Moduls und/oder zur zusätzlichen Datenübertragung vorgesehen ist. (Fig. 4)

## Beschreibung

Die Erfindung betrifft nach einem ersten Aspekt der Erfindung ein SFP-Modul (Small-Form-Factor-Pluggable-Modul), das in einen SFP-Käfig eines Netzwerkgeräts einsteckbar ist, mit einem Gehäuse und einer eine Kommunikationsschnittstelle zur Datenübertragung repräsentierenden ersten Schnittstelle.

Nach einem zweiten Aspekt der Erfindung betrifft die Erfindung ein Entriegelungswerkzeug eines in einem SFP-Käfig verrasteten SFP-Moduls.

Nach einem dritten Aspekt der Erfindung betrifft die Erfindung ein SFP-Modul, das in einen SFP-Käfig eines Netzwerkgeräts einsteckbar ist, mit einem Gehäuse und einer darin angeordneten Schnittstelle.

Allgemein sind aus dem Stand der Technik SFP-Module zum Datenaustausch zwischen einem Netzwerkgerät, beispielsweise einem Switch, und einem Austauschpartnergerät bekannt. Zum Datenaustausch wird das SFP-Modul mit seiner einen Seite in das Netzwerkgerät eingesteckt. An seiner anderen Seite befindet sich eine Kupfer- oder Glasfaserleitung, die mit dem Austauschpartnergerät verbunden ist. Das SFP-Modul fungiert als ein Adapter zwischen den zu verbindenden Geräten. Die bisher bekannten SFP-Module sind mit einem definierten Funktionsumfang ausgestattet und somit nur für bestimmte Einsatzfälle nutzbar bzw. daran anpassbar.

Die Erfindung hat die Aufgabe ein SFP-Modul der eingangs genannten Art bereitzustellen, das die oben genannten Nachteile beseitigt.

Die Erfindung löst die gestellte Aufgabe nach einem ersten Aspekt der Erfindung mit einem gattungsgemäßen SFP-Modul, das erfindungsgemäß eine eine Funktionsschnittstelle repräsentierende zweite Schnittstelle aufweist, wobei die Funktionsschnittstelle zur Konfiguration des SFP-Moduls oder zur Konfiguration des SFP-Moduls und/oder zur zusätzlichen Datenübertragung vorgesehen ist. Die Kommunikationsschnittstelle und die Funktionsschnittstelle können als logische Schnittstellen aufgefasst werden, die durch die erste Schnittstelle und die zweite Schnittstelle als physische Schnittstellen realisiert werden. Die Verwendung der zweiten Schnittstelle zur Konfiguration des SFP-Moduls erweitert seine Einsatzmöglichkeiten signifikant. Während der Konfiguration kann das SFP-Modul in einem SFP-Käfig eingesteckt bleiben und gleichzeitig eine Datenübertragung über die erste Schnittstelle stattfinden.

Das SFP-Modul kann auch konfiguriert werden, wenn es vom Netzwerkgerät getrennt ist. Dann kann das SFP-Modul über die zweite Schnittstelle mit Energie versorgt werden, wozu lediglich ein PC erforderlich ist. Mit dem PC kann das SFP-Modul für den jeweiligen Verwendungszweck konfiguriert, versendet und schließlich mit dem Netzwerkgerät verbunden werden.

Durch die zweite Schnittstelle kann das Netzwerkgerät mit zusätzlichen Funktionen ausgerüstet werden, ohne das Netzwerkgerät modifizieren zu müssen. So können über die zweite Schnittstelle während der Datenübertragung von dem SFP-Modul Zusatzinformationen ausgegeben werden, die Software des SFP-Moduls kann bei geschlossenem SFP-Modul-Gehäuse aktualisiert und die aktuelle Softwareversion ausgelesen werden, die Zeitsynchronisation mehrerer SFP-Module erfolgen, für die Inventarisierung des SFP-Moduls seine Identifikationsdaten, beispielsweise die Seriennummer, ausgelesen und zur Aufzeichnung und Analyse der Netzwerkverkehr ausgeleitet werden.

Ferner ermöglicht die zweite Schnittstelle einen komfortablen Austausch mehrerer SFP-Module. Denn die Konfigurationsdaten können über die zweite Schnittstelle ausgelesen, auf dem PC gespeichert und anschließend in ein baugleiches SFP-Modul zurückgespielt werden. Somit kann die identische SFP-Modul-Konfiguration beim Austausch der SFP-Module auf das andere baugleiche SFP-Modul übertragen werden.

Ebenso können mit dem SFP-Modul beim Einsatz von nichtverschlüsselungsfähigen Netzwerkgeräten die auszutauschenden Daten ver- und entschlüsselt werden, wobei über die zweite Schnittstelle die hierzu erforderlichen Schlüssel bereitgestellt werden. Ein hierzu notwendiger Kryptographieschlüssel kann über die zweite Schnittstelle in das SFP-Modul eingespielt werden. Bisher ist die Schlüsselverwaltung einer Netzwerkgeräte-Firmware nur bei sehr speziellen kostspieligen Netzwerkgeräten möglich. Ferner kann bei einem nicht-schaltfähigen Netzwerkgerät das SFP-Modul durch die zweite Schnittstelle zum Ein- und Ausschalten sowie zum Steuern von Geräten und Verbrauchern verwendet werden.

Die Datenübertragung kann als unidirektionaler Datenfluss oder als bidirektionaler Datenaustausch stattfinden.

Die beiden Schnittstellen können jeweils als ein Stecker oder eine Buchse ausgeführt sein. Weil bei einem SFP-Käfig mit mehreren Steckplätzen bei mehreren eingesteckten SFP-Modulen äußerst enge Platzverhältnisse herrschen, kann die zweite Schnittstelle vorzugsweise eine Buchse mit einer länglichen Öffnungsform sein. Auf diese Weise lässt sich die zweite Schnittstelle platzsparend realisieren. Wegen des geringen Platzangebots kann für die zweite Schnittstelle vorzugsweise eine USB-C-Buchse verwendet werden. Es sind aber auch andere Buchsenformate möglich, solange sie auch bei engen Platzverhältnissen realisierbar sind.

Die erste Schnittstelle und die zweite Schnittstelle können benachbart zueinander angeordnet sein. Vorzugsweise können die erste Schnittstelle und die zweite Schnittstelle an derselben Stirnseite des Gehäuses platziert sein. Somit können trotz enger Platzverhältnisse in den SFP-Käfig mehrere horizontal und/oder vertikal nebeneinander angeordnete SFP-Module eingesteckt werden, ohne miteinander zu kollidieren.

Üblicherweise wird das SFP-Modul in dem SFP-Käfig mit einem Rastmechanismus arretiert. Der Rastmechanismus kann am SFP-Käfig ein mit einer Öffnung versehenes Federelement aufweisen, in den ein am SFP-Modul vorgesehener Rasthaken einrasten kann, sobald das SFP-Modul vollständig in den SFP-Käfig eingeschoben ist. Zum Lösen des Rastmechanismus kann das SFP-Modul mit einem Entriegelungsschieber ausgestattet sein.

Ferner kann das SFP-Modul mit mindestens einer Einstecköffnung für ein Entriegelungswerkzeug versehen sein. Zum komfortablen Entfernen des in den SFP-Käfig eingesteckten SFP-Moduls kann die mindestens eine Einstecköffnung an einer frontseitigen Stirnseite platziert sein.

In einer bevorzugten Ausführungsform kann das SFP-Modul zwei Einstecköffnungen für das Entriegelungswerkzeug aufweisen, die jeweils neben gegenüberliegenden Enden der zweiten Schnittstelle platziert sind. Die Öffnung im Gehäuse für die Steckerbuchse der zweiten Schnittstelle kann an ihren gegenüberliegenden Enden breiter sein als die Steckerbuchse der zweiten Schnittstelle, sodass auch ein Zugang für das Entriegelungswerkzeug besteht und es an der Steckerbuchse vorbei in das Gehäuse eingeschoben werden kann.

Nach einem zweiten Aspekt der Erfindung betrifft die Erfindung ein Entriegelungswerkzeug zum Entriegeln eines in einem SFP-Käfig verrasteten SFP-Moduls nach einem der Ansprüche 1 bis 5. Mit dem Entriegelungswerkzeug kann der Entriegelungsschieber zum Lösen des Rastmechanismus bewegt werden. Die Notwendigkeit das Entriegelungswerkzeug zum Entfernen des SFP-Moduls verwenden zu müssen, erschwert das Ausstecken des SFP-Moduls durch unautorisierte Personen. In der Folge davon können Fehlfunktionen zum Beispiel durch ausgesteckte oder vertauschte SFP-Module verhindert werden. Außerdem erschwert das Entriegelungswerkzeug einen Diebstahl des SFP-Moduls.

Das Entriegelungswerkzeug kann mindestens einen Entriegelungsstift aufweisen. Dadurch ist auch bei engen Platzverhältnissen ein Lösen des Rastmechanismus möglich. Zum Lösen des Rastmechanismus wird das Entriegelungswerkzeug respektive der mindestens eine Entriegelungsstift in die hierfür vorgesehene mindestens eine Einstecköffnung eingeschoben. Beim Einschieben des Entriegelungswerkzeugs respektive des mindestens einen Entriegelungsstifts wird der Entriegelungsschieber soweit bewegt bis er den Rastmechanismus löst, sodass anschließend das SFP-Modul aus dem SFP-Käfig herausgezogen werden kann.

Damit das Entriegelungswerkzeug in die zwei Einstecköffnungen, die jeweils an den gegenüberliegenden Enden der zweiten Schnittstelle platziert sind, eingesteckt werden kann, kann es zwei gegenüberliegende Entriegelungsstifte aufweisen.

Zur komfortablen Handhabung und kostengünstigen Herstellung kann das Entriegelungswerkzeug einen plattenförmigen oder zylinderförmigen Grundkörper besitzen, an dessen einem Ende der mindestens eine Entriegelungsstift angeordnet ist.

Ferner betrifft die Erfindung nach einem dritten Aspekt der Erfindung ein SFP-Modul, bei dem erfindungsgemäß eine Schnittstelle eine Kommunikationsschnittstelle zur Datenübertragung und eine Funktionsschnittstelle zur Konfiguration des SFP-Moduls oder zur Konfiguration des SFP-Moduls und/oder zur zusätzlichen Datenübertragung aufweist. Die eine im Gehäuse angeordnete Schnittstelle integriert als physische Schnittstelle die Kommunikationsschnittstelle und die Funktionsschnittstelle, die jeweils als logische Schnittstellen aufzufassen sind. Folglich ermöglicht die eine im Gehäuse angeordnete Schnittstelle mit der Funktionsschnittstelle die gleichen signifikant erweiterten Einsatzmöglichkeiten und Zusatzfunktionen wie die die Funktionsschnittstelle repräsentierende zweite Schnittstelle des SFP-Moduls nach dem ersten Aspekt der Erfindung. Ferner ist mit dem SFP-Modul ebenfalls die Datenübertragung als unidirektionaler Datenfluss oder als bidirektionaler Datenaustausch möglich.

Nachfolgend werden Ausführungsbeispiele der Erfindungen anhand der beiliegenden Zeichnung näher erläutert.

Im Einzelnen zeigen:
- Fig. 1: eine schematische Darstellung einer Datenübertragung zwischen einem SFP-Modul und einem Netzwerkgerät gemäß dem Stand der Technik;
- Fig. 2: eine schematische Darstellung einer Datenübertragung zwischen einem erfindungsgemäßen SFP-Modul nach dem ersten und dem dritten Aspekt der Erfindung und dem Netzwerkgerät;
- Fig. 3: mehrere in einen SFP-Käfig eingesteckte SFP-Module nach dem ersten Aspekt der Erfindung;
- Fig. 4: eine Explosionsdarstellung eines der SFP-Module aus Fig. 3;
- Fig. 5: eine Seitenansicht auf ein Gehäuse des SFP-Moduls aus Fig. 4;
- Fig. 6: eine perspektivische Draufsicht auf das SFP-Modul aus Fig. 4 mit einem teilweise eingeschobenen Verriegelungsbolzen;
- Fig. 7: eine perspektivische Draufsicht auf das SFP-Modul aus Fig. 4 und ein Entriegelungswerkzeug vor dem Einschieben in das SFP-Modul;
- Fig. 8: eine Ansicht von unten auf das SFP-Modul aus Fig. 4 mit dem teilweise eingeschobenen Entriegelungswerkzeug aus Fig. 7
- Fig. 9: eine seitliche Schnittansicht durch das SFP-Modul aus Fig. 4 und den SFP-Käfig und eine Detailansicht eines Rastmechanismus in einem ersten Stadium eines Lösens des Rastmechanismus;
- Fig. 10: die seitliche Schnittansicht und Detailansicht aus Fig. 9 in einem zweiten Stadium des Lösens des Rastmechanismus;
- Fig. 11: die seitliche Schnittansicht und Detailansicht aus Fig. 9 beim Herausziehen des SFP-Moduls aus dem SFP-Käfig;
- Fig. 12: eine Frontansicht auf ein SFP-Modul nach dem dritten Aspekt der Erfindung.

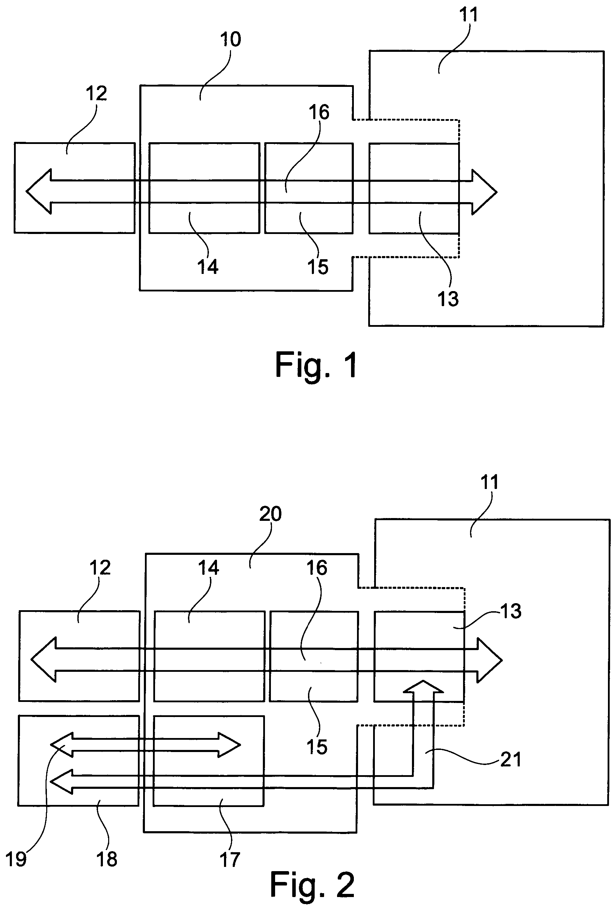

Fig. 1 zeigt ein SFP-Modul 10 (Small-Form-Factor-Pluggable-Modul) gemäß dem Stand der Technik, ein Netzwerkgerät 11 und eine Leitung 12, die eine Kupfer- oder Glasfaserleitung sein kann. Das SFP-Modul 10 weist zur Verbindung mit dem Netzwerkgerät 11 einen Steckverbinder 13 auf und zum Anschluss an die Leitung 12 eine Schnittstelle 14. Ein Transceiver 15 im SFP-Modul 10 überträgt in beide Richtungen Daten zwischen der Leitung 12 und dem Netzwerkgerät 11, angedeutet durch einen den Datenaustausch darstellenden Pfeil 16.

Fig. 2 zeigt ein erfindungsgemäßes SFP-Modul 20, das Netzwerkgerät 11 und die Leitung 12. Das SFP-Modul 20 ist ebenfalls durch den Steckverbinder 13 mit dem Netzwerkgerät 11 und mit der Schnittstelle 14 mit der Leitung 12 verbunden. An der Leitung 12 kann ein hier nicht gezeigtes Austauschpartnergerät zum Datenaustausch mit dem Netzwerkgerät 11 angeschlossen sein. Der Transceiver 15 sorgt entlang des Pfeils 16 für den Datenaustausch.

Eine weitere Schnittstelle 17 des SFP-Moduls 20 ist mit einer Leitung 18 verbunden. Die Schnittstelle 17 wird zur Konfiguration des SFP-Moduls 20 genutzt, welche zu diesem Zweck mit der Leitung 18 mit einem hier nicht näher dargestellten PC verbunden sein kann. Einen während der Konfiguration stattfindenden Datenaustausch repräsentiert ein Pfeil 19.

Nach dem Abschluss der Konfiguration kann die Schnittstelle 17 für den Datenaustausch zwischen dem SFP-Modul 20 und dem Netzwerkgerät 11 genutzt werden, dargestellt durch einen Pfeil 21. Dazu läuft der Datenaustausch auch über den Steckverbinder 13. Auf diese Weise kann entlang des Pfeils 21 die Schnittstelle 17 genutzt werden, um das Netzwerkgerät 11 mit zusätzlichen Funktionen auszustatten. Das Netzwerkgerät 11 muss dazu nicht modifiziert werden.

Somit ist entlang der Pfeile 16, 19 und 21 eine Datenübertragung als unidirektionaler Datenfluss oder als bidirektionaler Datenaustausch möglich.

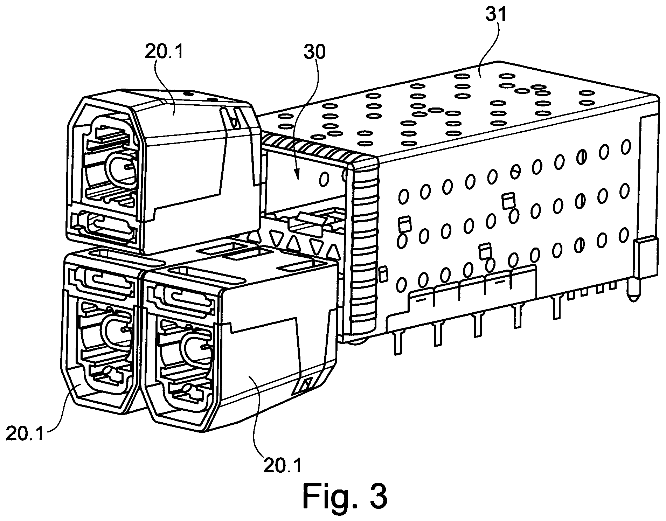

Fig. 3 zeigt drei SFP-Module 20.1, die in einen Steckplatz 30 eines SFP-Käfigs 31 eingesteckt sind. Der SFP-Käfig 31 kann in dem hier nicht näher dargestellten Netzwerkgerät 11 verbaut sein.

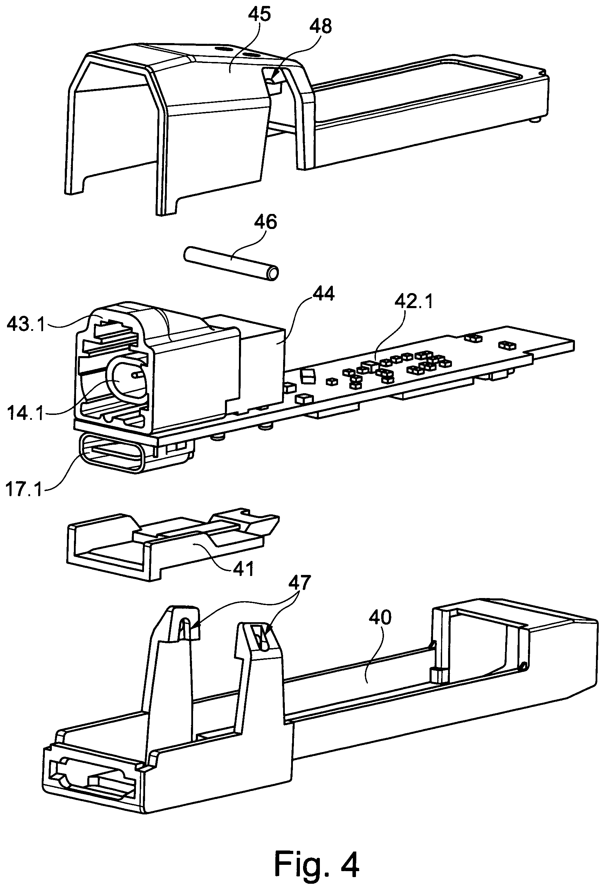

Das SFP-Modul 20.1 weist einen Rahmen 40 auf, der einen Entriegelungsschieber 41 und eine Hauptplatine 42.1 aufnimmt. Die Hauptplatine 42.1 ist mit einem Steckergehäuse 43.1, in dem sich die Schnittstelle 14.1 befindet (siehe Fig. 2), der weiteren Schnittstelle 17.1 (siehe Fig. 2) und einem Abschirmgehäuse 44 bestückt. Ein auf den Rahmen 40 aufgesetztes Gehäuse 45 schützt die Komponenten 42.1, 43.1 und 44 gegenüber der Umgebung. Das auf den Rahmen 40 aufgesetzte Gehäuse 45 wird mit einem Verriegelungsbolzen 46 gesichert, der hierzu in Öffnungen 47 und 48 eingeschoben wird (siehe Fign. 4 bis 6).

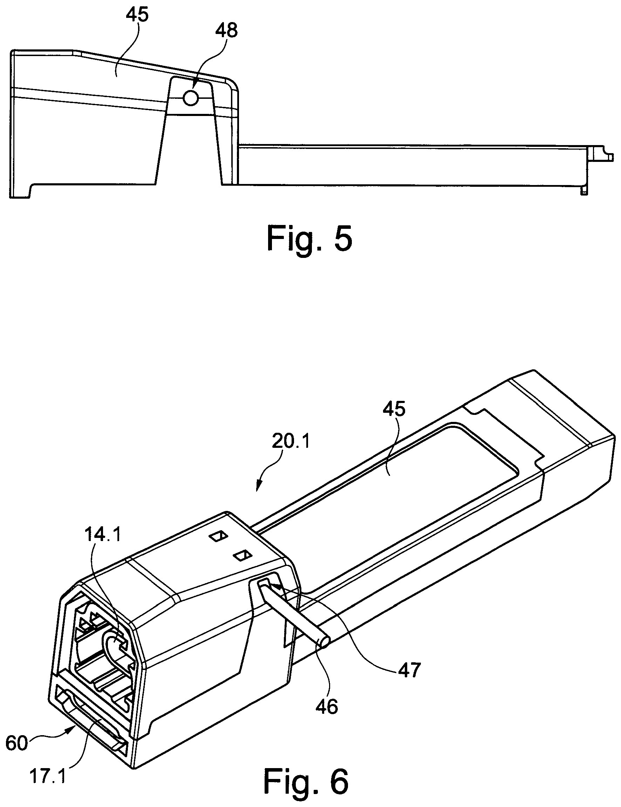

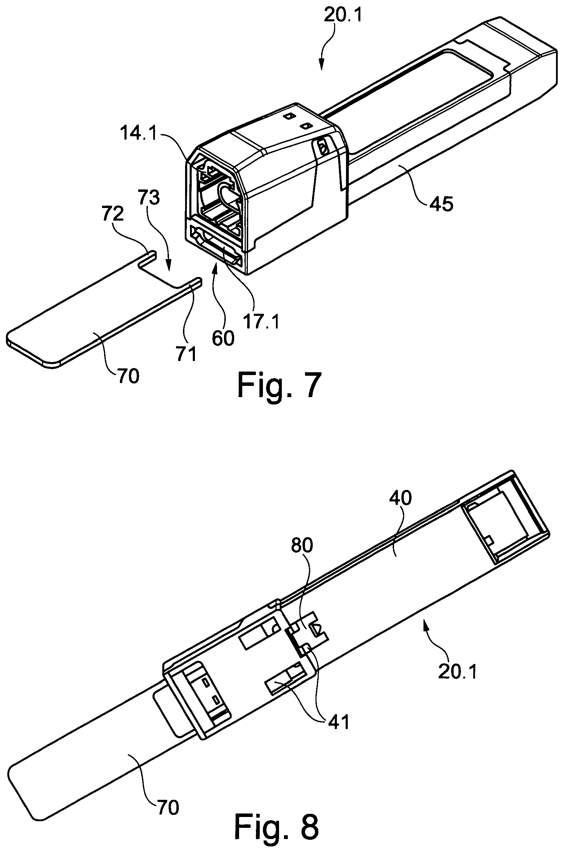

Die Schnittstellen 14.1 und 17.1 sind als nebeneinander angeordnete Buchsen mit länglichen Öffnungen ausgeführt, deren Symmetrieachsen parallel zueinander verlaufen. Das Gehäuse 45 ist mit einer länglich geformten Öffnung 60 für die Steckerbuchse 17.1 versehen, die an ihren gegenüberliegenden Enden breiter ist als die Steckerbuchse 17.1, um auch einen Zugang für ein Entriegelungswerkzeug 70 zu ermöglichen (siehe Fig. 6 und 7).

Die Fign. 7 und 8 zeigen das Entriegelungswerkzeug 70 mit zwei Entriegelungsstiften 71 und 72, die in die Öffnung 60 eingesteckt werden können, um den Entriegelungsschieber 41 zu bewegen und damit einen Rastmechanismus, durch den das SFP-Modul 20.1 in dem SFP-Käfig 31 arretiert ist, zu lösen. Die beiden Entriegelungsstifte 71 und 72 bilden ein Maul 73, welches beim Einschieben des Entriegelungswerkzeugs 70 in die Öffnung 60 die zweite Schnittstelle 17.1 aufnimmt, sodass die Stifte 71 und 72 an den Enden der zweiten Schnittstelle 17.1 vorbeigeschoben werden können. Der Entriegelungsschieber 41 gleitet entlang einer in den Rahmen 40 eingearbeiteten Führungsnut 80.

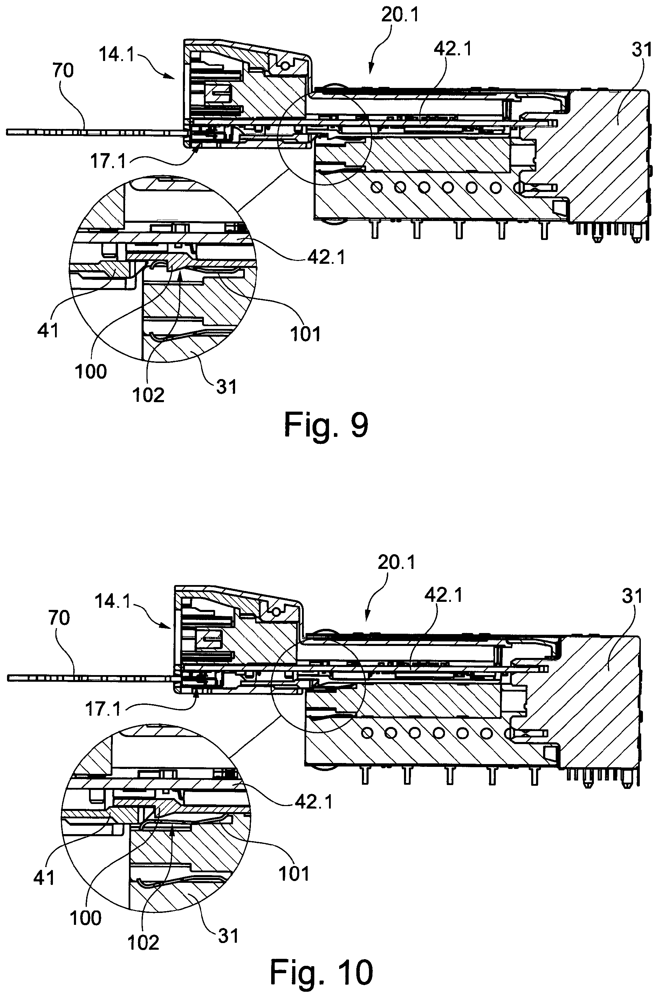

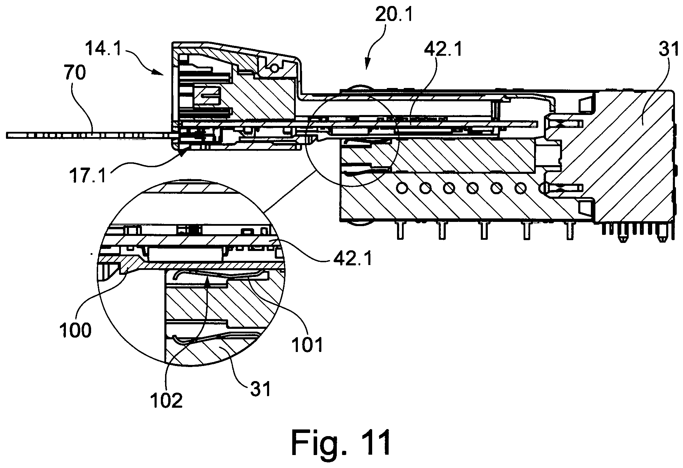

Die Fign. 10 bis 12 zeigen das in dem SFP-Käfig 31 befindliche SFP-Modul 20.1. Das SFP Modul 20.1 ist mit einem Rasthaken 100 versehen und der SFP-Käfig 31 mit einem eine Rastöffnung 102 aufweisenden Federelement 101. Sobald das SFP-Modul 20.1 vollständig in den SFP-Käfig 31 eingeschoben ist, rastet der Rasthaken 100 in die Rastöffnung 102 des Federelements 101 ein und arretiert das SFP-Modul 20.1 im SFP-Käfig 31. Das Federelement 101 ist an seinem steckplatzöffnungsseitigen Ende vom SFP-Modul 20.1 weggebogen. Zum Lösen des Rasthakens 100 aus der Rastöffnung 102 bewegt das Entriegelungswerkzeug 70 den Entriegelungsschieber 41 auf das Federelement 101 zu (siehe Fig. 9). Im weiteren Bewegungsablauf wird der Entriegelungsschieber 41, sobald er das gebogene Ende des Federelements 101 erreicht hat, unter das Federelement 101 geschoben und hebt es dadurch vom Rasthaken 100 ab (siehe Fig. 10). Anschließend wird das SFP-Modul 20.1 zusammen mit dem in das SFP-Modul 20.1 eingesteckten Entriegelungswerkzeug 70 aus dem SFP-Käfig 31 herausgezogen (siehe Fig. 11).

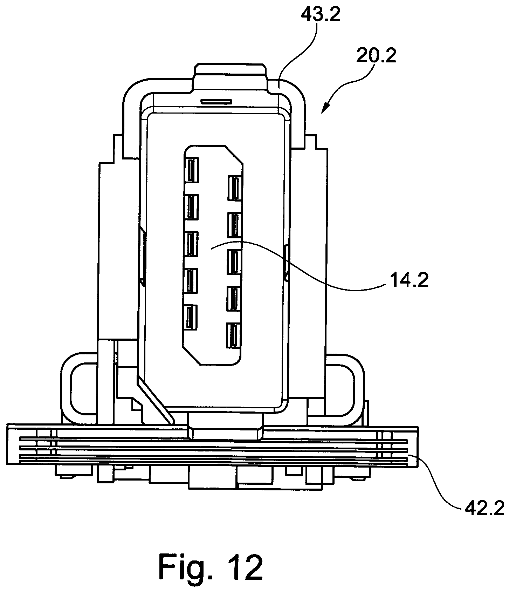

Fig. 12 zeigt ein SFP-Modul 20.2 mit einem auf einer Hauptplatine 42.2 angeordneten Steckergehäuse 43.2, das in ein zur besseren Darstellung hier nicht gezeigtes Gehäuse montiert und mit einer Schnittstelle 14.2 versehen ist. Die Schnittstelle 14.2 integriert eine Kommunikationsschnittstelle zur Datenübertragung und eine Funktionsschnittstelle, die zur Konfiguration des SFP-Moduls 20.2 verwendet werden kann. Alternativ oder zusätzlich kann die Funktionsschnittstelle zur zusätzlichen Datenübertragung eingesetzt werden.

### BEZUGSZEICHENLISTE

- 10: SFP-Modul
- 11: Netzwerkgerät
- 12: Leitung
- 13: Steckverbinder
- 14.1: Schnittstelle
- 14.2: Schnittstelle
- 14: Transceiver
- 15: Pfeil für Datenaustausch
- 16: Schnittstelle
- 17: Leitung
- 18: Pfeil für Datenaustausch

- 20.1: SFP-Modul
- 20.2: SFP-Modul
- 21: Pfeil für Datenaustausch

- 30: Steckplatz
- 31: SFP-Käfig

- 40: Rahmen
- 41: Entriegelungsschieber
- 42.1: Hauptplatine
- 42.2: Hauptplatine
- 43.1: Steckergehäuse
- 43.2: Steckergehäuse
- 44: Abschirmgehäuse
- 45: Gehäuse
- 46: Verriegelungsbolzen
- 47: Öffnung
- 48: Öffnung

- 60: Öffnung

- 70: Entriegelungswerkzeug
- 71: Entriegelungsstift
- 72: Entriegelungsstift
- 73: Maul

- 80: Führungsnut

- 100: Rasthaken
- 101: Federelement
- 102: Rastöffnung

## Patentansprüche

1. SFP-Modul (20.1), das in einen SFP-Käfig (31) eines Netzwerkgeräts (11) einsteckbar ist, mit einem Gehäuse (45) und einer eine Kommunikationsschnittstelle (14) zur Datenübertragung repräsentierenden ersten Schnittstelle (14.1), **dadurch gekennzeichnet, dass** es eine eine Funktionsschnittstelle (17) repräsentierende zweite Schnittstelle (17.1) aufweist, wobei die Funktionsschnittstelle (17) zur Konfiguration des SFP-Moduls (20.1) oder zur Konfiguration des SFP-Moduls (20.1) und/oder zur zusätzlichen Datenübertragung vorgesehen ist.

2. SFP-Modul (20.1) nach dem vorhergehenden Anspruch, **dadurch gekennzeichnet, dass** die erste Schnittstelle (14.1) und die zweite Schnittstelle (17.1) benachbart zueinander angeordnet sind.

3. SFP-Modul (20.1) nach einem der vorhergehenden Ansprüche, **dadurch gekennzeichnet, dass** es einen Entriegelungsschieber (41) aufweist.

4. SFP-Modul (20.1) nach einem der vorhergehenden Ansprüche, **dadurch gekennzeichnet, dass** es mindestens eine Einstecköffnung für ein Entriegelungswerkzeug (70) zum Entriegeln des SFP-Moduls (20.1) aufweist.

5. SFP-Modul (20.1) nach Anspruch 4, **dadurch gekennzeichnet, dass** es zwei Einstecköffnungen für das Entriegelungswerkzeug (70) aufweist, die jeweils neben gegenüberliegenden Enden der zweiten Schnittstelle (17.1) platziert sind.

6. Entriegelungswerkzeug (70) zum Entriegeln eines in einem SFP-Käfig (31) verrasteten SFP-Moduls (20.1) nach einem der Ansprüche 1 bis 5.

7. Entriegelungswerkzeug (70) nach Anspruch 6, **dadurch gekennzeichnet, dass** es mindestens einen Entriegelungsstift (71, 72) aufweist.

8. Entriegelungswerkzeug (70) nach Anspruch 6 oder 7, **dadurch gekennzeichnet, dass** es zwei gegenüberliegende Entriegelungsstifte (71, 72) aufweist.

9. Entriegelungswerkzeug (70) nach einem der Ansprüche 6 bis 8, **dadurch gekennzeichnet, dass** es einen plattenförmigen oder zylinderförmigen Grundkörper besitzt, an dessen einem Ende der mindestens eine Entriegelungsstift (71, 72) angeordnet ist.

10. SFP-Modul (20.2), das in einen SFP-Käfig eines Netzwerkgeräts (11) einsteckbar ist, mit einem Gehäuse und einer darin angeordneten Schnittstelle (14.2), **dadurch gekennzeichnet, dass** die Schnittstelle (14.2) eine Kommunikationsschnittstelle (14) zur Datenübertragung und eine Funktionsschnittstelle (17) zur Konfiguration des SFP-Moduls (20.2) oder zur Konfiguration des SFP-Moduls (20.2) und/oder zur zusätzlichen Datenübertragung aufweist.
